# EUROPEAN PATENT APPLICATION

(11) **EP 1 933 502 A1**
(43) Date of publication of application: **18.06.2008**
(21) Application number: 06715231.4
(22) Date of filing: 03.03.2006
(51) Int. Cl.: H04L 12/28, H04Q 7/22

(54) **MOBILE COMMUNICATION DEVICE**

(30) Priority: 05.10.2005 JP 2005292829
(71) Applicant: MATSUSHITA ELECTRIC INDUSTRIAL CO., LTD., Osaka 571-8501 (JP)
(72) Inventor: KAWAMURA, Akira, Matsushita Electric Industrial Co.,Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/304172
(87) International publication number: WO 2007/039941

(57) **Abstract**

There is provided a mobile communication device capable of performing AP search at a connection destination and connection with a terminal device with a low power consumption and in a short time. The device includes access point search means (101) for searching an access point, search result holding means (102) for holding at least an identifier (501) and a channel number (502) among access point information detected, and access point information registration means (103) capable of registering an identifier of an arbitrary access point in advance. When the access point search means (101) searches an access point, if at least one of the access point information pieces registered in the access point information registration means (103) is contained in the access point information held in the search result holding means (102), search is performed only in a radio channel to which an access point registered in the access point information registration means (103) belongs.

## Description

### Technical Field

The present invention relates to a mobile communication apparatus. In particular, the present invention relates to a mobile communication apparatus providing WLAN (Wireless Local Area Network) communication functions, such as mobile telephone device, laptop computer, PDA (Personal/Digital/Data Assistants), mobile IP telephone device, digital camera and MP3 player.

### Background Art

Up till now, this type of mobile communication apparatus is known to perform communication in a communication environment with the most desirable condition for users (for example, see Patent Document 1).

The mobile communication apparatus disclosed in Patent Document 1 sets the communication mode of the network/access point of the highest priority level, with reference to a communication setup file regulating orders of communication.

Next, the mobile communication apparatus searches for communication channels and decides whether or not wireless connection is possible with the access point setting the communication mode of the highest priority level.

In this case, if wireless connection is not possible with the set access point, the mobile communication apparatus decides whether or not there is a set access point of the next highest priority level in the communication setup file.

If there is a set access point of the next highest priority level, the mobile communication apparatus changes the setting to the communication mode of the network/access point of the next highest priority level, searches for communication channels and decides whether or not wireless connection is possible with the set access point.

The above-described processing is repeated, and, in a state where a communication mode is changed to the communication mode of the network/access point of a given priority level, if wireless communication is possible, the mobile communication apparatus selects and sets a communication channel and is in a standby reception state.

Thus, this mobile communication apparatus searches for communication channels in order from the communication channel of the higher priority level, with reference to a communication setup file regulating orders of communication. As a result, if wireless communication is possible, the mobile communication apparatus is in a connection condition, and, if wireless communication is not possible, the mobile communication apparatus searches for the communication channel of the next highest priority level in the communication setup file.

That is, this mobile communication apparatus selects one arbitrary communication apparatus based on a preset condition out of a plurality of communication apparatuses that can perform communication, and is connected with the selected communication apparatus to make communication possible.

Consequently, the mobile communication apparatus disclosed in Patent Document 1 can perform communication in the most advantageous condition for users even if these users use this communication terminal anywhere.

Further, up till now, a technique is proposed for providing high-speed, low-cost, available communication systems and telephone device connecting apparatuses and mobile telephone devices forming these communication systems.

The communication system disclosed in Patent Document 2 uses a mobile telephone device containing a wireless apparatus that can perform short-range wireless communication in addition to communication in mobile telephone networks, and personal or public connection kit that performs short-range wireless communication via the Internet.

Further, if the mobile telephone device and the personal or public connection kit are capable of communication, a list is provided to register the fact.

Further, when the mobile telephone device designates a telephone number and makes a call, the communication system refers to the list. If the telephone number is in the list, communication is performed via the Internet, and, if the telephone number is not in the list, communication is performed via mobile telephone networks.

The mobile telephone device in this communication system can make a call via the internet which is low-cost and high-communication-speed.
Patent Document 1: Japanese Patent Application Laid-Open No.2004-88516
Patent Document 1: Japanese Patent Application Laid-Open No.2003-309647

### Disclosure of Invention

### Problems to be Solved by the Invention

However, even when the mobile communication apparatus disclosed in Patent Document 1 is connected with an access point using communication channels of low priority level, the mobile communication apparatus searches for communication channels of higher priority level in order according to preset priority levels. Consequently, there is a problem that excessive power consumption and time are required.

Further, for example, when the mobile communication apparatuses disclosed in Patent Documents 1 and 2 try to perform communication by connecting with public access points of wireless LAN provided in stations or in restaurants, the state of the public access points is not clear for users.

Therefore, in this case, these mobile communication apparatuses require processing of searching for all wireless channels and selecting public access points meeting communication requirements of interest from detected public access points.

Thus, to start communication by WLAN, first, this type of mobile communication apparatus needs to search for access points (AP) with which the mobile communication apparatus is connected by scanning (AP search).

In the basic sequence from an AP search to an access point connection in the mobile communication apparatus, first, the mobile communication apparatus sends probe requests.

Next, by returning probe responses to the mobile communication apparatus, access points having received the probe requests transmitted from the mobile communication apparatus, report that the mobile communication apparatus is in the communication area of the access points.

To start communication, the mobile communication apparatus transmits a connection request to an access point.

In response to the connection request from the mobile communication apparatus, an access point connects the mobile communication apparatus and terminal apparatuses (such as server and other mobile communication apparatuses) which are connection destinations.

By the way, although radio frequency used in the WLAN is different between, for example, countries, areas and standards, currently, communication standard is used widely and commonly between 1 channel and 14 channels in Japan.

Further, radio frequency used in the WLAN presets the frequency band to be used for each access point upon communication.

Consequently, to perform anAP search, this type of mobile communication apparatus cannot recognize access points if a probe request is not sent by the radio frequency used in the access points.

However, upon a probe request, this type of conventional mobile communication apparatus is in a state where users cannot know which communication channel between channel 1 and channel 14 is used in the access point to be connected with.

Consequently, first, the conventional mobile communication apparatus transmits probe requeststo accesspoints through all channels between channel 1 and channel 14.

That is, conventional mobile communication apparatuses transmit probe requests through all channels between channel 1 and channel 14, waits for a response from an arbitrary channel, and searches for responding access points.

Further, in a wireless communication using, for example, WLAN, if radio interference occurs, communication cannot be performed properly. Consequently, with one probe request, probe responses may not be received from the access points reliably.

By this means, the conventional mobile communication apparatus generally transmits probe requests to an access point two or three times.

Consequently, if the conventional mobile communication apparatus transmits probe requests to an access point two or three times, 14Ch×2=28 or 14Ch×3=42 probe requests need to be transmitted, and, as a result, the probe requests require significant power consumption and time.

Further, this type of conventional communication apparatus periodically performs a communication channel search such that, for example, radio field strength of access points are displayed and the access point that is handover (which means to switch connection to another access point of good radio field strength) destination is monitored. By this means, this type of conventional mobile communication apparatus has a problem that power consumption for probe requests increases in proportion to time.

It is therefore an object of the present invention to provide a mobile communication apparatus that performs an AP search for a connection destination and connects with a terminal apparatus in lower power consumption and in shorter time.

### Means for Solving the Problem

The mobile communication apparatus of the present invention employs a configuration having: an access point searching section that searches for an access point via radio, a search result holding section that holds at least an identifier and a channel number as a list, out of information of the access point detected by the access point searching section; an access point information registering section that can register an identifier of an arbitrary access point in advance; and a search control section that, when the access point searching section searches the access point, if information of an access point registered by the access point information registering section contains at least one information of the access point held by the search result holding section, performs control to search only radio channels of the access point registered by the access point information registering section.

The access point searching method of the present invention employs a configuration having: an access point information registering step of registering an identifier of an arbitrary access point in advance; an access point searching step of searching for an access point via radio; and a searching result holding step of holding at least an identifier and a channel number as a list, out of information of the access point detected by the access point searching step, andinwhich, if the information of the access point held by the search result holding step is included in information of the access point registered by the access point information registering step, the access point searching step searches only radio channels included in an arbitrary access point registered by the access point information registering step.

The computer program according to the present invention implements the access point searching method.

The recording medium according to the present invention stores the computer program.

### Advantageous Effect of the Invention

According to the present invention, it is possible to perform an AP search for a connection destination and connect with a terminal apparatus in lower power consumption and in shorter time.

### Brief Description of Drawings

FIG.1 illustrates a schematic view of wireless communication environment of a mobile communication apparatus according to an embodiment of the present invention;
FIG. 2 illustrates a time chart showing a scanning operation of a mobile communication apparatus according to an embodiment of the present invention;
FIG.3 illustrates a basic operation from an AP search to connection of a mobile communication apparatus according to an embodiment of the present invention;
FIG.4 is a block diagram showing a configuration of main components of a mobile communication apparatus according to an embodiment of the present invention;
FIG. 5 illustrates an ESSID (identifier) and channel number of a list held in a search result holding section of a mobile communication apparatus according to an embodiment of the present invention;
FIG. 6 illustrates AP search results in a communication area of home AP displayed in a monitor of personal computer;
FIG.7 illustrates a basic operation from an AP search to ESSID designated connection of a mobile communication apparatus according to an embodiment of the present invention;
FIG.8 illustrates a probe request transmission upon an AP search in a conventional mobile communication apparatus in the upper part, and illustrates a probe request transmission upon an AP search in a mobile communication apparatus according to an embodiment of the present invention in the lower part;
FIG.9 illustrates a flowchart showing an operation of registering an access point of a mobile communication apparatus according to an embodiment of the present invention;
FIG.10 illustrates a flowchart showing an operation of access point search of a mobile communication apparatus according to an embodiment of the present invention; and
FIG.11 illustrates an AP search of mobile communication apparatus according to an embodiment of the present invention.

### Best Mode for Carrying Out the Invention

An embodiment of the present invention will be explained below in detail with reference to the accompanying drawings. Further, in the drawings, components or corresponding parts having the same configurations or functions will be assigned the same reference numerals and detailed explanations thereof will not be repeated.

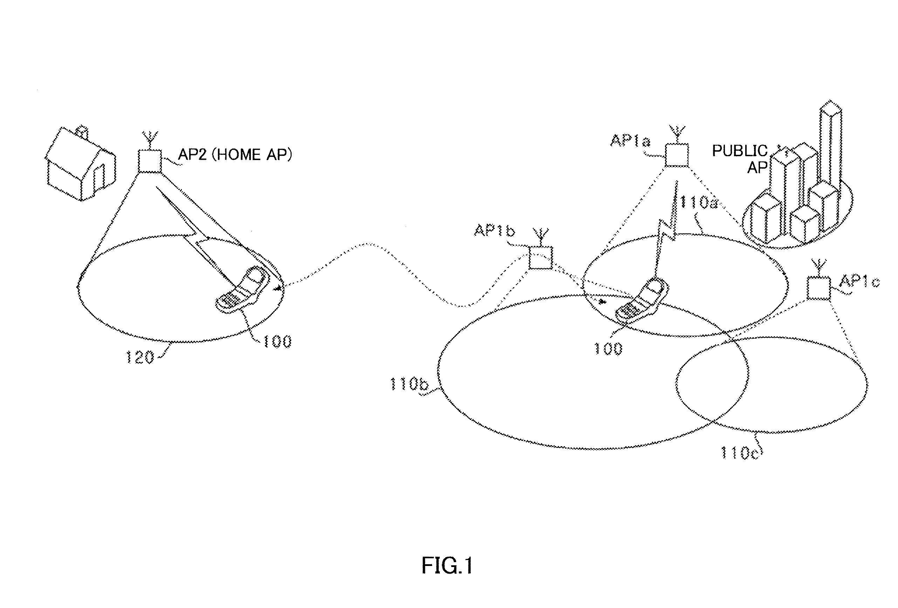

First, a wireless communication environment of the mobile communication apparatus according to an embodiment of the present invention will be explained. FIG.1 illustrates a schematic view showing a wireless communication environment of the mobile communication apparatus according to an embodiment of the present invention.

As shown in FIG.1, communication terminal 100 as a mobile communication apparatus of the present embodiment, which is a WLAN client, connects with a given access point and starts communication in a state where communication terminal 100 has moved into the range of communication area 110a, 110b, 110c... of public access point (public AP) AP1a, AP1b, AP1c... or the range of communication area 120 of home access point (home AP) AP2 which is the home of WLAN client.

In FIG.1, first, to start communication, communication terminal 100 performs an AP search (scanning) and searches an AP to be connected with. Communication terminal 100 transmits probe requests by scanning.

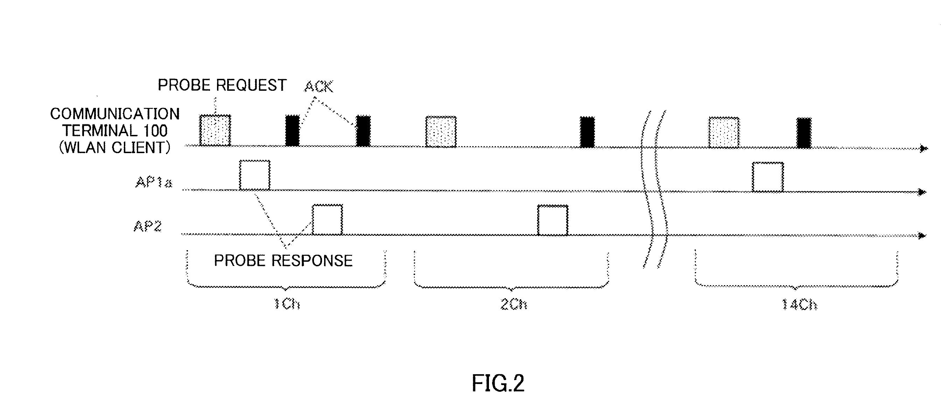

As shown in FIG.2, if a probe response is returned from public access point AP1a to communication terminal 100 in response to the probe request of this communication terminal 100, communication terminal 100 recognizes that communication terminal 100 is in communication area 110a of public access point AP1a.

Further, if a probe response is returned from home access point AP2 to communication terminal 100 in response to the probe request of communication terminal 100, communication terminal 100 recognizes that communication terminal 100 is in the communication area of home access point AP2.

In this state, to start communication, communication terminal 100 transmits a connection (association) request to a access point of interest that has returned a probe response.

By this means, the access point having received the connection request from communication terminal 100 connects communication terminals which are not shown such as a server and other communication terminals that are connection destinations, and communication terminal 100.

By the way, as described above, although radio frequency used in the WLAN is various between, for example, countries, areas and standards, currently, communication standard is used widely and commonly between 1 channel and 14 channels in Japan.

Further, radio frequency to be used presets the frequency band to be used for each access point upon communication.

By this means, to send a probe request, communication terminal 100 needs to use the radio frequency used in the access point to be connected with. Without this processing, communication terminal 100 cannot recognize the access point to be connected with.

However, upon a probe request, communication terminal 100 cannot know which communication channel between channel 1 and channel 14 is used in the access point.

Therefore, first, communication terminal 100 transmits probe requests to access points through all channels between channel 1 and channel 14, and connects with the access point that has returned a probe response.

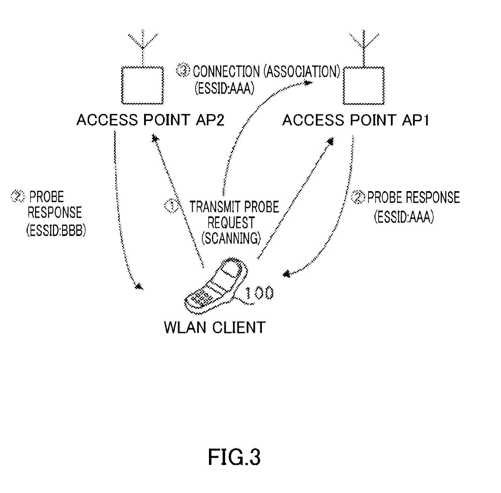

That is, as shown in FIG.3, for example, communication terminal 100 transmits (scanning) probe requests for channels between channel 1 and channel 14, to an access point.

On the other hand, access points AP1 andAP2 return probe responses (ESSID: AAA, BBB) to communication terminal 100 representing a WLAN client.

By this means, communication terminal 100 connects (associates) with access point AP1 (ESSID: AAA) and starts communication.

By the way, inawirelesscommunicationusing, foe example, WLAN, if radio interference occurs, communication cannot be performed properly. Consequently, with one probe request, communication terminal 100 may not receive probe responses from access points.

Therefore, communication terminal 100 transmits probe requests to access points at least two or three times.

Consequently, in this case, communication terminal 100 transmits 28 (=14Ch×2) or 42 (=14Ch×3) probe requests to an access point.

Here, upon transmitting probe requests to access points and receiving probe responses from the access points, communication terminal 100 consumes power.

Thus, by transmitting/ receiving probe requests and probe responses for channels between channel 1 and channel 14 two or three times, communication terminal 100 that is used for any connection, generally searches for an access point to be connected with. Consequently, there is a problem that significant power consumed by the probe request is needed.

That is, as shown in FIG.1, WLAN is used in cases where communication terminal 100 enters the communication area of public AP's such as stations and restaurants, or the communication area of the home AP of the WLAN client's home.

In FIG.1, although communication terminal 100 having entered the communication area of public AP' s knows the set spot (hot spot) of the access point in advance, communication terminal 100 does not know which channel is set for the frequency band used in the access point.

Therefore, communication terminal 100 needs to search all channels between channel 1 and channel 14 in the communication area of a public AP, and this AP search causes significant power consumption.

Further, communication terminal 100 having entered the communication area of public AP' s needs to perform the AP search for all channels between channel and channel 14 at least several (two or three) times, which causes a problem of taking a long search time.

As described above, if communication terminal 100 does not know which channel is set for the frequency band used in the access point, communication terminal 100 cannot find a channel to be connected with, without the AP search for all channels between channel 1 and channel 14 at least several times.

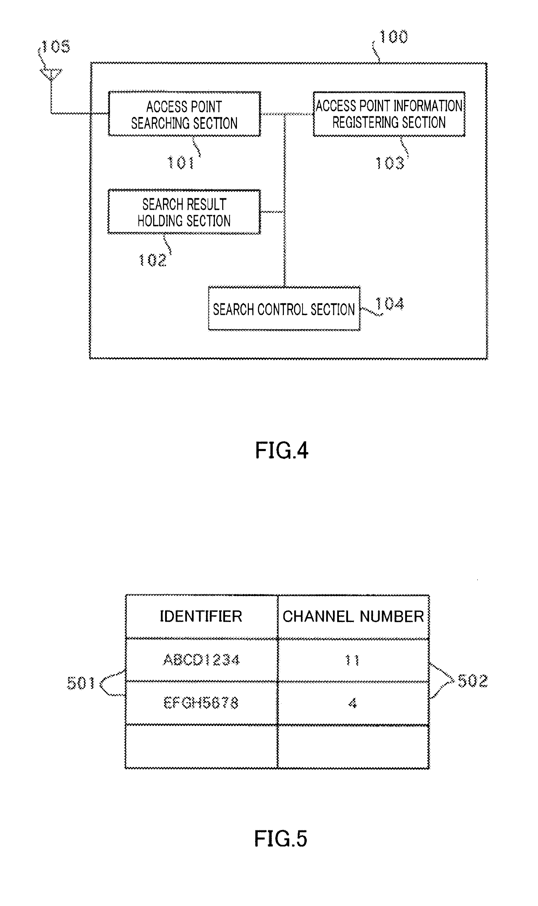

As shown in FIG.4, communication terminal 100 according to the present embodiment employs a configuration having access point searching section 101, search result holding section 102, access point information registering section 103 and search control section 104.

In FIG.4, access point searching section 101 transmits/receives probe requests and probe responses via radio by antenna 105 and searches for an access point of interest.

Search result holding section 102 holds at least ESSID (identifier) 501 and channel number 502 shown in FIG.5, out of information of access points detected by access point searching section 101.

Access point information registering section 103 can register ESSID (identifier) 501 of an arbitrary access point in advance.

Upon searching for access points by access point searching section 101, when the information of access points registered by access point information registering section 103 contains at least one access point information held by search result holding section 102, search control section 104 performs control to search only radio channels used in access points registered in access point information registering section 103.

That is, in FIG.1, the home AP (access point AP2) is the access point set by the user, and is generally one (per floor, that is, not more than two, for example).

Further, the connection of the home AP (access point AP2) needs not be switched to other access points and the radio channel of the access point is specific, so that it is possible to know a channel to be used in advance.

When communication terminal 100 according to the present embodiment connects with a home AP (access point AP2), the channel used in advance of the home AP needs to be scanned only one time, and an AP search needs not to be performed for all channels between channel 1 and channel 14. However, although public access points have the same ESSID (identifier), generally, a channel to be connected with in the public access points varies to avoid radio interference. By this means, with public access points, even though ESSID to be connected with is known in advance, all channels need to be scanned.

That is, communication terminal 100 having entered communication area 120 of a home AP can search for an access point to be connected with, by scanning only channels of the home AP set in advance.

Communication terminal 100 according to the present embodiment displays AP search (scanning) results in communication area 120 of a home AP on, for example, a monitor of a personal computer.

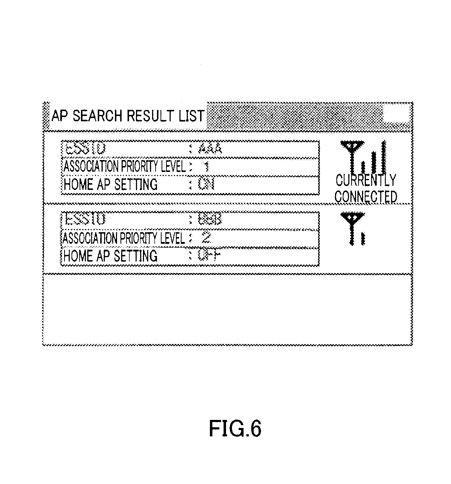

As a result, as shown in FIG.6, communication terminal 100 has two connectable access points in communication area 120 of the home AP.

As is commonly known, a personal computer can preferentially set the access point to be connected with. Further, the access point which is a connection destination of communication terminal 100 has the name of "ESSID."

Accordingly, by presetting the channel and ESSID used in the access point, it is possible to find the set access point by one scan and connect this access point with communication terminal 100 preferentially and automatically.

Therefore, communication terminal 100 according to the present invention registers the channel and ESSID of the home AP (home access point AP2), detected by AP search and displayed on the upperpart of FIG. 6, in access point information registering section 103 in advance.

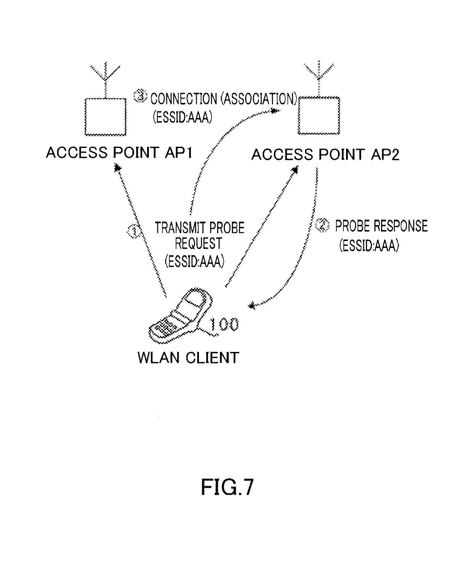

By this means, as shown in FIG.7, when communication terminal 100 according to the present embodiment enters the communication area of a home AP, communication terminal 100 can find home access point AP2 quickly, by one scan, using the home AP channel and ESSID registered in advance, and connect with home access point AP2 automatically and quickly.

As described above, communication terminal 100 according to the present embodiment may search only one preset channel, so that it is possible to avoid wasting power consumption and search time due to repeating AP search for fourteen channels several times in the same way as conventional communication terminals.

That is, to register ESSID of the access point, communication terminal 100 according to the present invention sets the access point to a home AP in advance (i.e., ESSID 501 which is identifier shown in FIG. 5, is attached). Here, although the number of ESSID's of access points to be registered is an arbitrary number, the number is preferably equal to or less than thirteen.

Generally, this type of communication terminal cannot search for an access point to be connected with, without scanning fourteen channels.

On the other hand, communication terminal 100 can decide that, if the access point with ESSID (identifier) 501 (in this case, the ESSID is EFGH5678 and the channel number is 4) which is the home AP registered in advance, is found in the access point being searched for, communication terminal 100 is in the communication area of a home AP now.

If communication terminal 100 according to the present embodiment finds access points including ESSID (identifier) 501 set in this home AP, after that, communication terminal 100 needs not to perform an AP search, that is, communication terminal 100 sends probe requests to search for only access points with this ESSID (identifier) 501 periodically.

By this means, communication terminal 100 according to the present embodiment needs not to send probe requests to search for access points other than the access points with preset ESSID (identifier) 501, and can save power consumption and search time required for the probe requests.

As described above, although scanning needs to be performed for maximum fourteen channels upon an AP search, by setting communication terminal 100 to search for only access points of channels with ESSID (identifier) 501 (i.e., registered channel) known in advance, it is possible to connect communication terminal 100 and an access point registered in advance by performing an AP search for access points of one channel.

Consequently, after the access point of registered channel (channel 4) is searched for in the first AP search, communication terminal 100 changes the scan operation to search for the access points of the registered channel(channel 4).

When the access points of the registered channel (channel 4) cannot be found by scanning in the middle of communication, communication terminal 100 can decide that communication terminal 100 is outside the communication area of access points of the registered channel (channel 4), and, consequently, changes a search operation to scan all channels at this moment.

By the way, although communication terminal 100 in communication basically needs not to scan access points, generally, this type of communication terminal 100 performs AP search periodically to display the strength of radio waves (by an antenna symbol) during communication.

By this means, this type of communication terminal 100 consumes power by AP search for this antenna symbol display. Even in this case, conventional communication terminals take more search time and power consumption by performing AP search for all channels.

Further, a general communication terminal performs operation to scan connectable access points other than the currently connecting access point.

To avoid disconnection during a call, a communication terminal in communication needs to perform this operation and change access points in as short time as possible.

Communication terminal 100 according to the present embodiment needs to perform AP search for only one registered channel, so that it is possible to find an access point that is a connection destination quickly and save power consumption and search time.

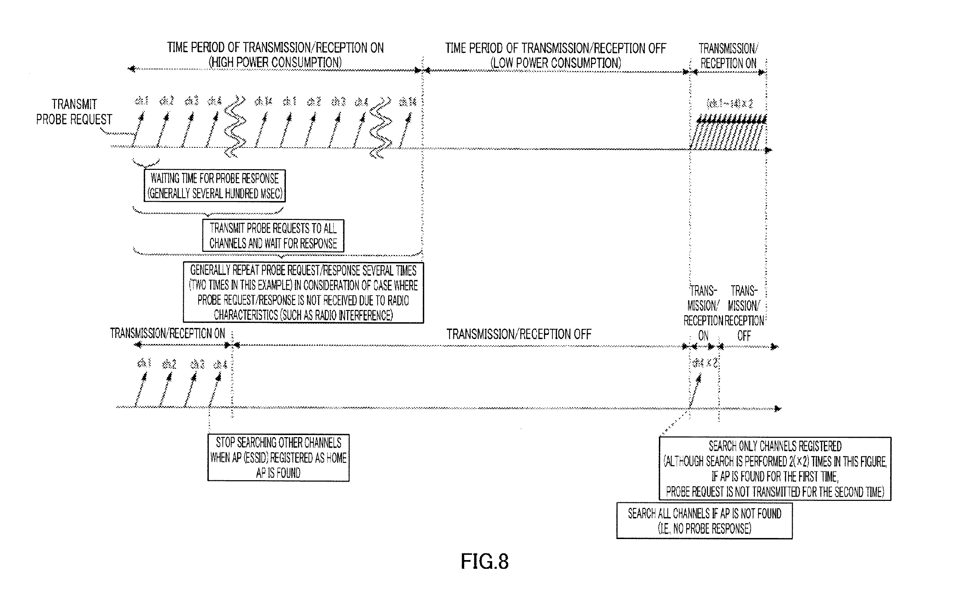

By the way, as shown in the upper part of FIG.8, this type of communication terminal generally takes 100 waits milliseconds for a response, in response to probe requests for one channel.

Therefore, if this type of communication terminal sends probe requests for channels between channel 1 and channel 14 two times, it takes 14×2×0.1 (sec)=2.8 (sec) to sendprobe requests periodically (for example, every 60 seconds).

Here, power consumption of the probe request canbe reduced by making the number of times of sending probe requests one and making the setting time shorter between a probe request and a probe response.

However, by making the number of times of sending probe requests one and making the setting time shorter between probe requests and probe responses, there is a high possibility that the communication terminal fails to receive a probe response.

Thus, as described above, this type of communication terminal makes the number of times of sending probe requests two or three, and makes the setting time 100 milliseconds between a probe request and a probe response.

Further, this type of communication terminal sets two times of probe requests for channels between channel 1 and channel 14 as one set, and performs an AP search by, for example, transmitting this one set of probe requests every 60 seconds periodically.

Consequently, this type of communication terminal further consumes power for 2.8 (sec), every 60 seconds, for example.

On the other hand, as shown in the lower part of FIG.8, when communication terminal 100 according to the present embodiment searches for a home AP, channels for transmitting probe requests are determined in advance, and, consequently, communication terminal 100 needs to transmit probe requests to a channel which is a connection destination one or two times and consumes only power consumption for 0.1(sec)×2=0.2(sec).

As described above, communication terminal 100 according to the present embodiment can reduce power consumption and search time.

Further, by attaching ESSID (identifier) 501 to a home AP in advance, communication terminal 100 according to the present embodiment can identify home access point AP2 from ESSID (identifier) 501 and channel information (channel number 502).

Accordingly, communication terminal 100 according to the present embodiment can decide whether or not the access point searched for, using ESSID (identifier) 501 and channel number 502, is a home AP, and, upon searching for a home AP, automatically decide that communication terminal 100 is in the communication area of the home WLAN.

By this means, after the home AP search, communication terminal 100 according to the present embodiment is applicable for, for example, automatically transmitting cancel signals that cancel a home security lock, automatically changing public phone communication to IP communication and synchronizing a home personal computer.

Although a case has been described with the present embodiment where access points to be registered in advance include a home AP as an example, access points to be registered in advance may include access points of the company of the WLAN client or favorite hot spots of the WLAN client.

In this case, channel information of access points subj ect to search may be acquired upon a probe response, in response to the first probe request, and may be stored in access point registering section 103 of communication terminal 100.

Further, in this case, a probe request may be sent in order from the access point of higher use frequency in communication terminal 100 according to the present embodiment, that is, a probe request may be sent in order from the access point of more access numbers in communication terminal 100.

Further, although an example has been presented above where communication terminal 100 according to the present embodiment searches for access points using one specific channel, communication terminal 100 may search for access points using one of two specific channels.

Further, ESSID (identifier) 501 may be the same or vary between access points. In this case, the channel number differs peraccesspoint. Further, if apluralityof accesspoints sharing the same ESSID (identifier) 501 are set, a channel to be used may be selected according to the strength of radio waves of these access points.

Next, the operations of communication terminal 100 according to the present embodiment will be explained.

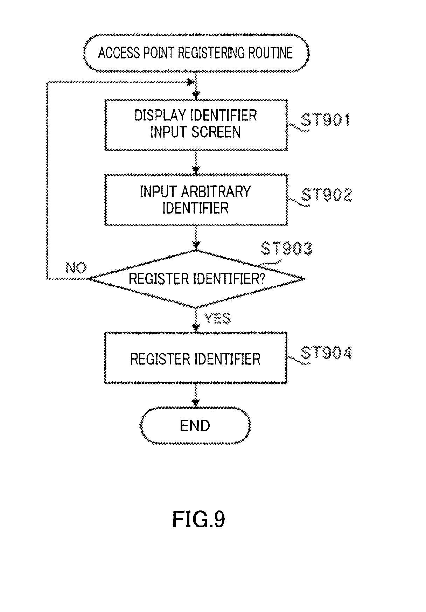

First, the registration operation of communication terminal 100 according to the present embodiment will be explained with reference to FIG.9.

As shown in FIG.9, when communication terminal 100 according to the present embodiment registers access points, communication terminal 100 displays ESSID (identifier) input screen (not shown) (step ST901).

Arbitrary ESSID (identifier) 501 is then inputted to an access point of interest displayed in the ESSID (identifier) input screen (step ST902).

Next, whether or not ESSID (identifier) 501 inputted at step ST902 is registered, is decided.

At this step ST903, if ESSID (identifier) 501 inputted at step ST902 is not registered, the flow returns to step ST901 and access point registration is repeated.

On the other hand, at step ST903, if ESSID (identifier) 501 inputted at step ST902 is registered, after the operation of registering inputted ESSID (identifier) 501 in the memory of access point information registering section 103 shown in FIG.4, the operation of access point registration is finished.

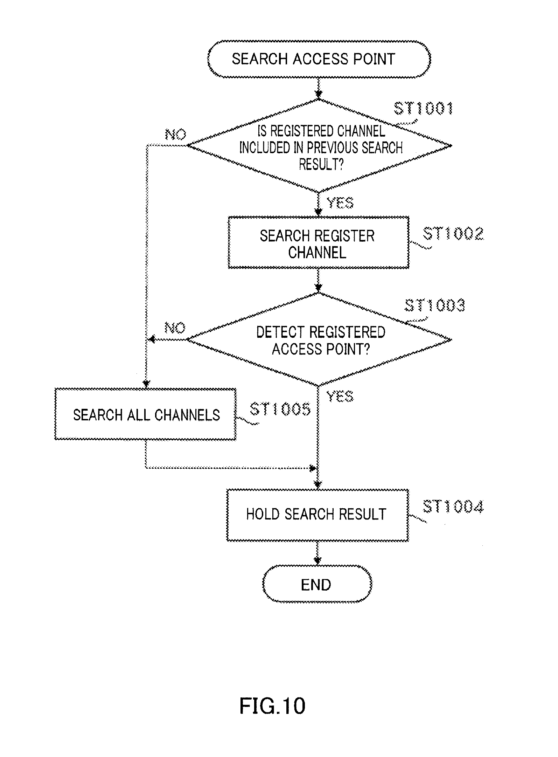

Next, the operation of access point search of communication terminal 100 according to the present embodiment will be explained with reference to FIG.10.

As shown in FIG.10, to search for access points, first, communication terminal 100 according to the present embodiment refers to search result holding section 102 and access point information registering section 103 shown in FIG. 4, and decides whether or not a registered channel is included in previous search results (step ST1001).

In this case, as shown in FIG.5, the search result list stored in search result holding section 102 contains at least information of ESSID (identifier) 501 and channel number 502.

Further, at least the ESSID (identifier) preset by the WLAN client is registered in access point information registering section 103.

Further, in decision step ST1001, if the ESSID (identifier) registered in access point information registering section 103 matches ESSID (identifier) 501 in the list held by search result holding section 102, search is performed for registered channels of channel number 502 corresponding to ESSID (identifier) 501 of the list (step ST1002).

As a result of this search, whether or not access points registered in access point information registering section 103 are detected, is decided (step ST1003).

In this case, if the access points registered in access point information registering section 103 are detected, the result of search is held in search result holding section 102 (i.e., the result of search is stored in a memory).

On the other hand, at deciding step ST1003 for search results, when the access points registered in access point information registering section 103 are not detected, or when the ESSID (identifier) registered in access point information registering section 103 does not match ESSID (identifier) 501 in the list held by search result holding section 102 by the decision at step ST1001, regardless of registered contents of access point information registering section 103, a search is performed for all radio channels.

Here, above-described all radio channels may be channels 1 to 14 in WLAN regulated by IEEE802. 11b, for example, and differs per radio standard to be used.

Further, the search results at steps ST1002 or ST103 are stored in search result holding section 102 (step ST 1004) and referred to upon next AP search.

Further, all of above-described steps for access point search are automatically repeated by user operation or search control section 104.

As described above, communication terminal 100 according to the present embodiment searches for only the minimum number of radio channels to detect registered access points based on search results, so that it is possible to search for access points in lower power consumption and shorter time.

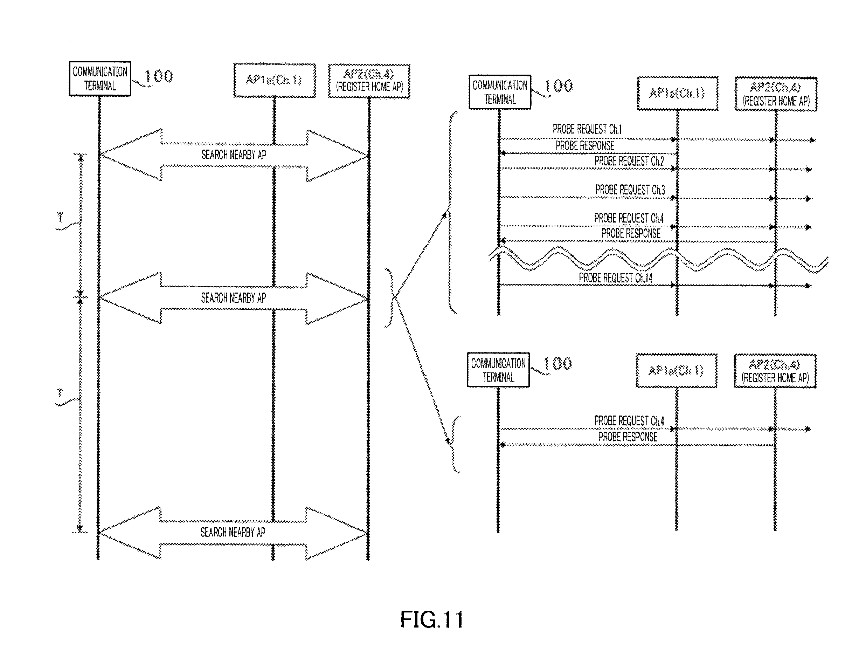

Next, the AP search sequence in communication systems using communication terminal 100 according to the present embodiment, will be explained with reference to FIG.11. Here, a case will be described below where communication terminal 100 searches for public access point AP1a (Ch.1) and home access point AP2 (Ch.4) shown in FIG.1.

As shown in FIG.1, communication terminal 100 searches for nearby AP's (access point) in a given cycle T.

Here, if communication terminal 100 is out of the communication area of home access point AP2 (Ch.4) or is in the communication area of public access point APla (Ch.1) shown in FIG.1, public access point APla (Ch.1) returns a probe response to communication terminal 100, in response to the probe request (Ch.1) of communication terminal 100.

On the other hand, if communication terminal 100 is in the communication area of home access point AP2 (Ch.4), home access point AP2 (Ch.4) returns a probe response to communication terminal 100, in response to the probe request (Ch.4) of communication terminal 100.

The present application is based on Japanese Patent Application No.2005-292829, filed on October 5, 2005, the entire content of which is expressly incorporated by reference herein.

### Industrial Applicability

The mobile communication apparatus according to the present invention can perform an AP search for the connection destination and realize connection with a terminal apparatus in low power consumption and short time, so that the mobile communication apparatus is available to a mobile communication apparatus providing WLAN communication functions, such as a mobile telephone device, laptop computer, PDA (Personal Digital/Data Assistants), mobile IP telephone device, digital camera and MP3 player.

## Claims

1. A mobile communication apparatus comprising:
an access point searching section that searches for an access point via radio,
a search result holding section that holds at least an identifier and a channel number as a list, out of information of the access point detected by the access point searching section;
an access point information registering section that can register an identifier of an arbitrary access point in advance; and
a search control section that, when the access point searching section searches the access point, if information of an access point registered by the access point information registering section contains at least one information of the access point held by the search result holding section, performs control to search only radio channels of the access point registered by the access point information registering section.

2. The mobile communication apparatus according to claim 1, wherein, if the information of the access point registered by the access point information registering section is not held by the search result holding section, the search control section performs control to search all radio channels.

3. The mobile communication apparatus according to claim 1, wherein, if the information of the access point registered by the access point information registering section is not included in the search results, the search control section performs control to search a specific radio channel.

4. The communication apparatus according to claim 2, wherein a search order of search for a plurality of radio channels gives priority to a radio channel corresponding to the information of the access point registered by the access point information registering section.

5. An access point searching method comprising:
an access point information registering step of registering an identifier of an arbitrary access point in advance;
an access point searching step of searching for an access point via radio; and
a searching result holding step of holding at least an identifier and a channel number as a list, out of information of the access point detected by the access point searching step,
wherein, if the information of the access point held by the search result holding step is included in information of the access point registered by the access point information registering step, the access point searching step searches only radio channels included in the arbitrary access point registered by the access point information registering step.

6. The access point searching method according to claim 5, wherein, if the information of the access point held by the search result holding step is not included in the information of the access point registered by the access point information registering step, the access point searching step searches all radio channels.

7. The access point searching method according to claim 5, further comprising a search control step of performing control to search a specific radio channel if the information of the access point registered by the access point information registering step is not included in the search results.

8. The access point searching method according to claim 6, wherein a search order of search for a plurality of radio channels gives priority to a radio channel corresponding to the information of the access point registered by the access point information registering step.

9. A computer program that implements the access point searching method according to claim 5.

10. A recording medium that stores the computer program according to claim 9.
